# DEMANDE DE BREVET EUROPEEN

(11) **EP 0 873 938 A1**
(43) Date de publication de la demande: **28.10.1998**
(21) Numéro de dépôt: 98400937.3
(22) Date de dépôt: 16.04.1998
(51) Int. Cl.: B64D 35/08, B64D 27/14

(54) **Système de motorisation d'un avion de transport à hélices**

(30) Priorité: 24.04.1997 FR 9705058
(71) Demandeur: SOCIETE NATIONALE D'ETUDE ET DE CONSTRUCTION DE MOTEURS D'AVIATION, "S.N.E.C.M.A.", 75015 Paris (FR)
(72) Inventeur: Dusserre-Telmon, Guy Franck Paul, 77115 Sivry-Courtry (FR); Lardellier, Alain Marie Joseph, 77000 Melun (FR)

(57) **Abrégé**

Le système de motorisation d'un avion de transport à hélices comporte au moins un premier et un deuxième doublet d'hélices (11, 12; 31, 32) montés dans le plan des ailes de l'avion. Chaque doublet d'hélices comporte deux hélices disposées symétriquement de part et d'autre d'un axe central et longitudinal XX' de l'avion. Les premier et deuxième doublets d'hélices (11, 12; 31, 32) sont entraînés indépendamment l'un de l'autre, respectivement par des premier et deuxième groupes moteur (10, 30) disposés côte à côte dans le fuselage de l'avion et par l'intermédiaire de premier et deuxième ensembles de transmission indépendants (13, 33).

## Description

L'invention concerne un système de motorisation d'un avion de transport propulsé par des hélices et destiné à la propulsion horizontale. Elle s'applique en particulier aux avions de transport équipés d'un nombre pair d'hélices, le nombre d'hélices étant supérieur ou égal à quatre.

Dans les avions de transport propulsés par hélices, chaque hélice est reliée à un moteur de propulsion et entraînée par ce moteur. Chaque moteur comporte généralement un générateur de gaz et une turbine motrice qui entraîne une seule hélice. Chaque ensemble moteur et hélice est monté sur les ailes de l'avion.

Pour obtenir un fonctionnement convenable, il est essentiel que l'équilibrage de l'avion soit maintenu à tout instant. En particulier, en cas de panne d'un moteur, il est important que l'arrêt du moteur n'entraîne pas un déséquilibre de l'avion occasionné par la poussée assymétrique des moteurs restés en action.

Ainsi, par exemple, pour un avion comportant quatre turbopropulseurs disposés symétriquement sur les ailes de part et d'autre du fuselage de l'avion, il est nécessaire de surdimensionner les moteurs afin que la panne de l'un d'entre eux soit compensée par une augmentation de poussée des trois moteurs restant en fonctionnement.

L'invention a pour but de réaliser un nouveau système de motorisation d'un avion de transport à hélices permettant de maintenir l'équilibrage de l'avion en cas de panne d'un moteur et permettant de n'employer que deux moteurs pour entrainer quatre hélices au lieu de quatre moteurs habituellement nécessaires, d'où une réduction de coût du système de propulsion.

L'invention a également pour but de réaliser un système de motorisation d'un avion de transport à hélices disposant d'une propulsion résiduelle symétrique même en cas de panne d'un moteur.

Un autre but de l'invention est de réaliser un système de motorisation d'un avion de transport à hélices comportant une signature infra-rouge réduite par rapport aux systèmes de propulsion habituels, et permettant de réduire le coût d'entretien des moteurs.

Pour cela, l'invention consiste à utiliser deux groupes moteur pour entraîner, indépendemment l'un de l'autre, deux doublets d'hélices, les hélices de chaque doublet étant réparties symétriquement de part et d'autre de l'avion. Les groupes moteur sont disposés côté à côte dans le fuselage de l'avion et l'entraînement des doublets d'hélices est effectué par l'intermédiaire de deux ensembles de transmission indépendants. Chaque ensemble de transmission comporte des arbres transversaux avantageusement flexibles, reliant les hélices d'un même doublet par l'intermédiaire de boitiers d'engrenages et de réducteurs de vitesse permettant l'adaptation convenable des vitesses entre les groupes moteur et les hélices qu'ils entraînent.

Selon l'invention, le système de motorisation d'un avion de transport à hélices comportant au moins un premier et un deuxième doublet d'hélices montés dans le plan des ailes de l'avion, chaque doublet d'hélices comportant deux hélices disposées symétriquement de part et d'autre d'un axe central et longitudinal XX' de l'avion est caractérisé en ce que les premier et deuxième doublets d'hélices sont entraînés indépendamment l'un de l'autre, respectivement par des premier et deuxième groupes moteur disposés côte à côte dans le fuselage de l'avion et parallèlement à l'axe longitudinal XX' de l'avion, et par l'intermédiaire de premier et deuxième ensembles de transmission indépendants.

Avantageusement, dans le cas d'une application militaire, les deux moteurs sont situés dans la partie supérieure du fuselage de l'avion de manière, d'une part, à être naturellement cachés à la vue d'une éventuelle installation de missile infra-rouge placée au sol, et d'autre part, à protéger les moteurs de toute ingestion d'objets étrangers pouvant provenir notamment d'une surface de piste non préparée pour le décollage ou l'atterrissage d'avion de transport militaire.

D'autres particularités et avantages de l'invention apparaitront clairement dans la suite de la description donnée à titre d'exemple non limitatif et faite en regard des figures annexées qui représentent :
- la figure 1, une vue en coupe schématique d'un système de motorisation d'un avion de transport à quatre hélices, selon un premier mode de réalisation de l'invention ;
- la figure 2, une vue en coupe schématique et partielle d'un système de motorisation d'un avion de transport à quatre hélices, selon un deuxième mode de réalisation de l'invention ;
- la figure 3, une vue en coupe schématique d'un système de motorisation d'un avion de transport à quatre hélices, selon un troisième mode de réalisation de l'invention.

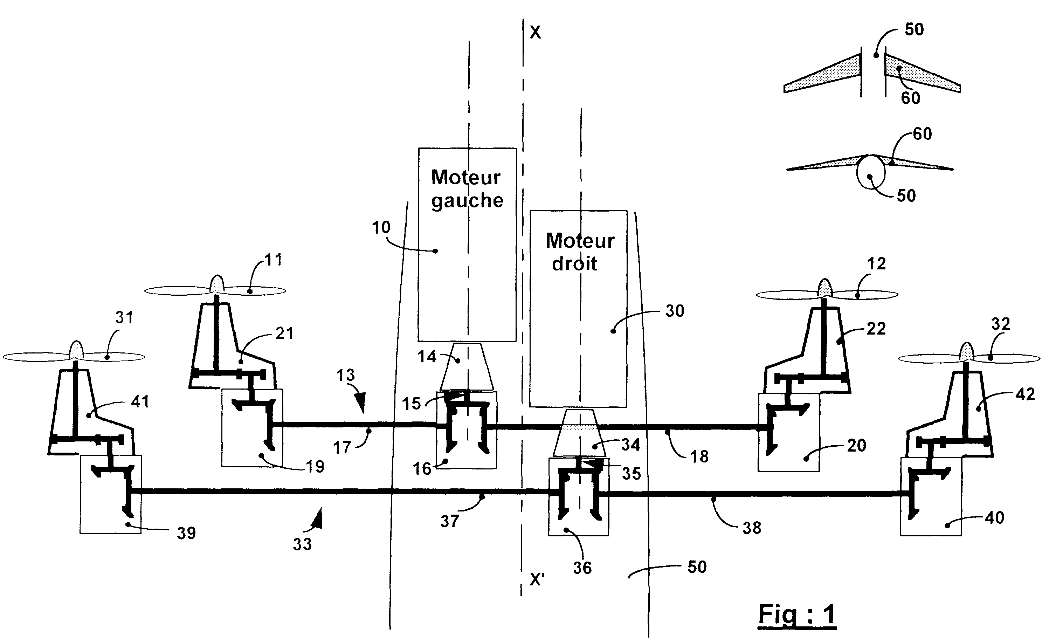

Dans les différents modes de réalisation de l'invention représentés sur les figures 1, 2, 3, le système de motorisation d'un avion de transport comporte un premier et un deuxième doublets d'hélices 11, 12 ; 31, 32, montés dans le plan des ailes 60 de l'avion et sont orientés de manière à tourner autour d'un axe sensiblement parallèle à l'axe longitudinal de l'avion pour assurer une force de propulsion horizontale.
Chaque doublet d'hélices comporte deux hélices disposées symétriquement de part et d'autre de l'axe central et longitudinal XX' de l'avion. Les premier et deuxième doublets d'hélices 11, 12 ; 31, 32, sont respectivement reliés à un premier et deuxième groupes moteur 10, 30 disposés côte à côte dans le fuselage 50 de l'avion et parallèlement à l'axe longitudinal XX'de l'avion. Préférentiellement, les deux groupes moteur sont placés dans la partie supérieure du fuselage de l'avion. Les premier et deuxième groupes moteur 10, 30 entraînent respectivement les premier et deuxième doublets d'hélices 11, 12 ; 31, 32 par l'intermédiaire d'un premier et d'un deuxième ensembles de transmission 13, 33 indépendants.

Les groupes moteur 10, 30 sont avantageusement des turboréacteurs du type comportant un générateur de gaz pour engendrer des gaz de combustion qui sont soumis à expansion par l'intermédiaire d'au moins une turbine motrice 14, 34. La turbine motrice est accouplée à un arbre de turbine longitudinal 15, 35 monté rotatif autour d'un axe parallèle à l'axe longitudinal XX' de l'avion. Les arbres de turbine 15, 35 sont respectivement reliés aux premier et deuxième ensembles de transmission 13, 33, eux-mêmes reliés respectivement aux premier et deuxième doublets d'hélices 11, 12 ; 31, 32. Les ensembles de transmission 13, 33 sont destinés à transmettre l'énergie de rotation des turbines motrices 14, 34 aux hélices. Ils comportent des arbres de transmission transversaux 17, 18 ; 37, 38 reliant l'arbre d'une turbine motrice 15, 35 aux différentes hélices 11, 12 ; 31, 32, par l'intermédiaire de boites d'engrenages. Les arbres de transmission transversaux permettent ainsi la synchronisation des deux hélices d'un même doublet. Les arbres de transmission transversaux sont disposés dans les ailes de l'avion et sont de préférence flexibles de manière à suivre la géométrie de l'aile de l'avion.

Dans un premier mode de réalisation de l'invention représenté sur la figure 1, chaque groupe moteur 10, 30 comporte une turbine motrice 14, 34 unique pour entraîner les deux hélices d'un même doublet. L'entrainement d'un doublet d'hélices est effectué par l'intermédiaire d'un ensemble de transmission 13, 33. L'ensemble de transmission 13 comporte des premier et deuxième arbres transversaux 17, 18, chaque arbre transversal 17, 18 comportant une première extrémité reliée à l'arbre 15 de la turbine motrice 14 par l'intermédiaire d'une boite d'engrenages 16 et une deuxième extrémité reliée respectivement aux première et deuxième hélices 11, 12 d'un même doublet. La liaison entre un arbre transversal 17, 18 et l'hélice 11, 12 correspondante est effectuée par l'intermédiaire d'une première, respectivement d'une deuxième boite d'engrenages 19, 20. La boite d'engrenages 16 reliée à l'arbre 15 de la turbine motrice 14 permet d'effectuer un renvoi d'angle entre l'arbre 15 de la turbine motrice 14 et les premier et deuxième arbres transversaux 17, 18. Les première et deuxième boites d'engrenages 19, 20 reliées aux hélices 11, 12 permettent d'effectuer des renvois d'angle entre les arbres transversaux 17, 18 et les axes longitudinaux de rotation des hélices 11, 12 correspondantes.

Avantageusement les première et deuxième boites d'engrenages 19, 20 reliées aux hélices 11, 12 sont associées respectivement à un premier et un deuxième réducteur de vitesse 21, 22 permettant de régler la vitesse de rotation des hélices 11, 12. L'ensemble de transmission 33 est réalisé de façon identique à l'ensemble de transmission 13.

Il comporte des premier et deuxième arbres transversaux 37, 38 connectés à l'arbre 35 de la turbine motrice 34 et respectivement aux hélices 31, 32 par l'intermédiaire de boites d'engrenages 36, 39, 40 et avantageusement de réducteurs de vitesse 41, 42. Les réducteurs de vitesse 21, 22, 41, 42 associés à chaque hélice permettent de régler la vitesse de fonctionnement des hélices correspondantes. Les boites d'engrenages 19, 20; 39, 40 et les réducteurs de vitesse 21, 22; 41, 42, associés à chaque hélice comportent un ensemble de pignons agencés de manière que toutes les hélices soient entraînées dans le même sens et à la même vitesse.

En cas de panne d'un moteur, la propulsion résiduelle de l'avion reste symétrique puisque le moteur restant en action continue d'entraîner un doublet d'hélices disposées symétriquement de part et d'autre de l'avion.

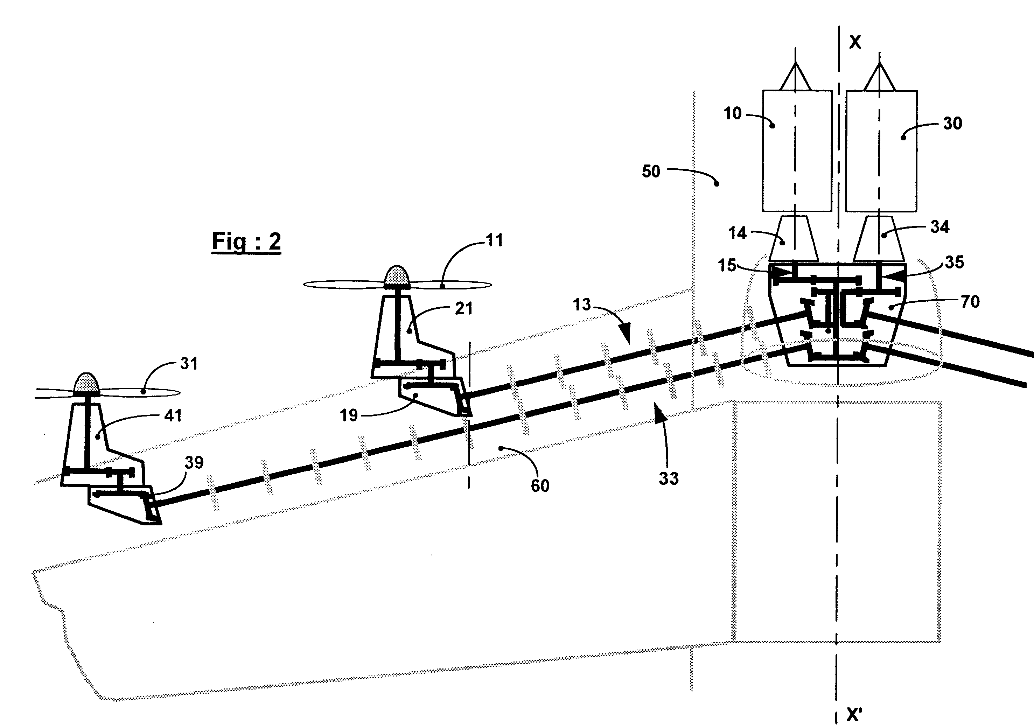

La figure 2 représente un deuxième mode de réalisation de l'invention dans lequel les arbres 15, 35 des deux turbines motrices 14, 34 associées respectivement aux deux groupes moteur 10, 30 sont reliés aux arbres transversaux 17, 18; 37, 38 des deux ensembles de transmission 13, 33 par l'intermédiaire d'une seule boite d'engrenages 70 commune aux deux ensembles de transmission 13, 33. La boite d'engrenages 70 commune comporte deux ensembles indépendants de pignons agencés de manière à effectuer respectivement des renvois d'angle entre les arbres 15, 35 des turbines motrices 14, 34 et les arbres transversaux 17, 18 ; 37, 38 des deux ensembles de transmission. L'utilisation d'un arrangement de deux ensembles de pignons indépendants au niveau de la boite d'engrenage 60 commune permet d'obtenir, comme dans le premier mode de réalisation de l'invention, deux ensembles de transmission indépendants.

Ce deuxième mode de réalisation de l'invention présente avantageusement une disposition quasiment symétrique des deux ensembles de transmission 13, 33.

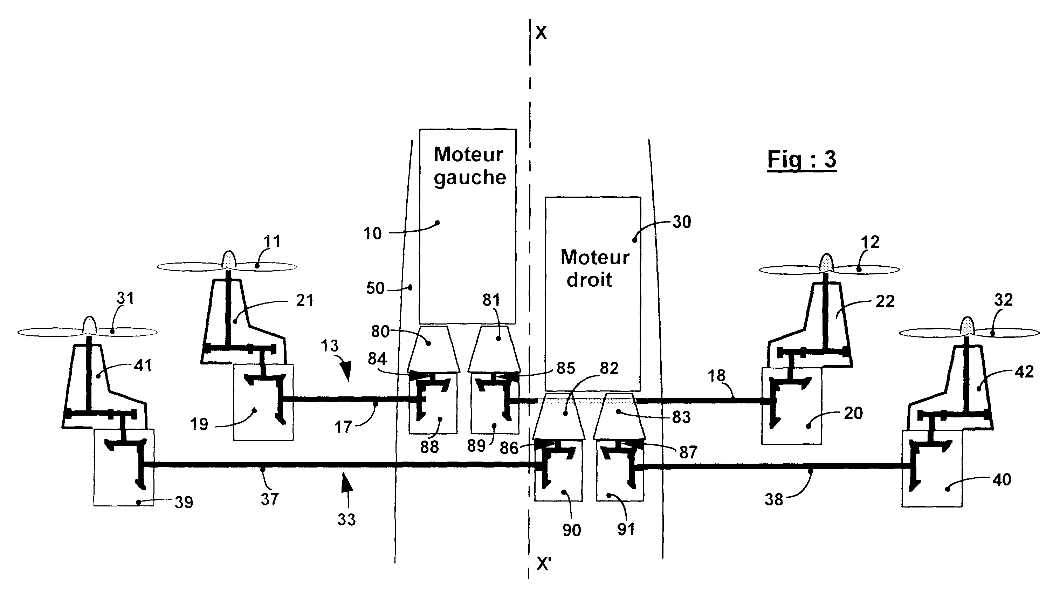

Dans un troisième mode de réalisation de l'invention représenté sur la figure 3, chaque groupe moteur 10, 30 comporte deux turbines motrices 80, 81; 82, 83, chaque turbine motrice entrainant une seule hélice par l'intermédiaire d'un arbre transversal.

Ainsi, les deux turbines motrices 80, 81 du premier groupe moteur 10 sont respectivement accouplées à des arbres de turbine longitudinaux 84, 85, montés rotatifs autour d'un axe correspondant parallèle à l'axe longitudinal XX' de l'avion.

Les arbres de turbines 84, 85 sont respectivement reliés aux arbres transversaux 17, 18 du premier ensemble de transmission 13 par l'intermédiaire de boites d'engrenages respectives 88, 89. Bien que deux boites d'engrenages 88, 89 soient représentées, il est possible de n'utiliser qu'une seule boite d'engrenages commune aux deux liaisons entre les arbres de turbine 84, 85 et les arbres transversaux 17, 18. Comme sur les figures 1 et 2, l'ensemble de transmission 13 est relié aux hélices 11, 12 du premier doublet d'hélices par l'intermédiaire des boites d'engrenages respectives 19, 20 et des réducteurs de vitesse respectifs 21, 22.

De même, les deux turbines motrices 82, 83 du deuxième groupe moteur 30 sont respectivement accouplées à des arbres de turbine longitudinaux 86, 87 montés rotatifs autour d'un axe correspondant parallèle à l'axe longitudinal XX' de l'avion. Les arbres de turbines 86, 87 sont respectivement reliés aux arbres transversaux du deuxième ensemble de transmission 33 par l'intermédiaire de boites d'engrenages respectives 90, 91.

L'ensemble de transmission 33 est relié aux hélices 31, 32 du deuxième doublet d'hélices par l'intermédiaire des boites d'engrenages respectives 39, 40 et des réducteurs de vitesse respectifs 41, 42.

Les trois modes de réalisation de l'invention décrits ci-dessus présentent tous une propulsion résiduelle symétrique même en cas de panne d'un moteur. Avantageusement, les moteurs peuvent être disposés dans la partie supérieure du fuselage de l'avion pour diminuer la signature infra-rouge de l'avion et réduire le coût d'entretien des moteurs en les protégeant de toute ingestion d'objets étrangers localisés par exemple sur une piste de décollage ou d'atterrissage insuffisamment préparée.

L'invention n'est pas limitée aux exemples de réalisation précisément décrits. En particulier, pour le troisième mode de réalisation de l'invention, il est possible d'utiliser une seule boite d'engrenages commune reliant les arbres des deux turbines motrices d'un même groupe moteur à un même ensemble de transmission, à la place des deux boites d'engrenages 88, 89 et/ou des deux boites d'engrenages 90, 91.

## Revendications

1. Système de motorisation d'un avion de transport à hélices comportant au moins un premier et un deuxième doublet d'hélices montés dans le plan des ailes de l'avion, chaque doublet d'hélices comportant deux hélices disposées symétriquement de part et d'autre d'un axe central et longitudinal XX' de l'avion, caractérisé en ce que les premier et deuxième doublets d'hélices (11, 12 ; 31, 32) sont entraînés indépendamment l'un de l'autre, respectivement par des premier et deuxième groupes moteur (10, 30) disposés côte à côte dans le fuselage de l'avion et parallèlement à l'axe longitudinal XX' de l'avion, et par l'intermédiaire de premier et deuxième ensembles de transmission indépendants (13, 33), chaque ensemble de transmission comportant des arbres transversaux reliant les hélices d'un même doublet par l'intermédiaire de boîtiers d'engrenages

2. Système de motorisation d'un avion de transport à hélices selon la revendication 1, caractérisé en ce que les deux groupes moteur (10, 30) sont disposés dans une partie supérieure du fuselage de l'avion.

3. Système de motorisation d'un avion de transport à hélices selon l'une des revendications 1 ou 2, caractérisé en ce que chaque ensemble de transmission (13, 33) comporte des premier et deuxième arbres de transmission transversaux (17, 18; 37, 38) reliés par une première extrémité à un même groupe moteur (10, 30) et par une deuxième extrémité à la première, respectivement la deuxième hélice ( 11, 12; 31, 32) du même doublet d'hélices.

4. Système de motorisation d'un avion de transport à hélices selon la revendication 3, caractérisé en ce que la liaison entre le premier, respectivement le deuxième, arbre transversal (17, 18; 37, 38) et la première, respectivement la deuxième, hélice (11, 12; 31, 32) du même doublet est réalisée par l'intermédiaire d'une première, respectivement d'une deuxième, boite d'engrenages (19, 20; 39, 40) reliée à l'hélice correspondante (11,12; 31, 32).

5. Système de motorisation d'un avion de transport à hélices selon l'une quelconque des revendications précédentes, caractérisé en ce que les premier et deuxième groupes moteur (10, 30) comportent respectivement au moins une turbine motrice (14, 34) accouplée à un arbre de turbine (15, 35) longitudinal monté rotatif autour d'un axe parallèle à l'axe longitudinal XX' de l'avion, l'arbre de turbine (15, 35) du premier, respectivement du deuxième groupe moteur (10, 30) étant relié au premier, respectivement au deuxième, ensemble de transmission (13, 33).

6. Système de motorisation d'un avion de transport à hélices selon la revendication 5, caractérisé en ce que l'arbre de turbine (15, 35) du premier, respectivement du deuxième, groupe moteur (10, 30) est relié au premier, respectivement au deuxième, ensemble de transmission (13, 33) par l'intermédiaire d'une troisième, respectivement d'une quatrième, boite d'engrenages (16, 36).

7. Système de motorisation d'un avion de transport à hélices selon la revendication 5, caractérisé en ce que les arbres de turbine (15, 35) des premier et deuxième groupes moteur (10, 30) sont reliés respectivement aux premier et deuxième ensembles de transmission (13, 33) par l'intermédiaire d'une seule boite d'engrenages (70) commune aux deux ensembles de transmission (13, 33), la boite d'engrenages (70) commune comportant deux ensembles indépendants de pignons reliés respectivement aux premier et deuxième ensemble de transmission (13, 33).

8. Système de motorisation d'un avion de transport à hélices selon la revendication 5, caractérisé en ce que chaque groupe moteur (10, 30) comporte deux turbines motrices (80, 81; 82, 83), chaque turbine motrice étant accouplée à un arbre de turbine respectif (84, 85; 86, 87), les deux arbres de turbine d'un même groupe moteur (10, 30) étant reliés au même ensemble de transmission (13, 33) par l'intermédiaire d'au moins une boite d'engrenages (88, 89; 90, 91).

9. Système de motorisation d'un avion de transport à hélices selon l'une quelconque des revendications précédentes, caractérisé en ce qu'il comporte en outre des réducteurs de vitesse (21, 22; 41, 42) associés à chaque hélice (11, 12; 31, 32).
